# EUROPÄISCHE PATENTANMELDUNG

(11) **EP 1 205 237 A2**
(43) Veröffentlichungstag der Anmeldung: **15.05.2002**
(21) Anmeldenummer: 01121748.6
(22) Anmeldetag: 19.09.2001
(51) Int. Cl.: B01F 17/00, A61K 31/00, A01N 25/04

(54) **Wirkstoffhaltige Emulsionen**

(30) Priorität: 02.10.2000 DE 10048797
(71) Anmelder: BAYER AG, 51368 Leverkusen (DE)
(72) Erfinder: Nyssen, Peter-Roger, 41542 Dormagen (DE); Wiesinger, Iris, 51373 Leverkusen (DE); Meier, Helmut-Martin, Dr., 40883 Ratingen (DE); Herrmann, Udo, Dr., 41541 Dormagen (DE)

(57) **Zusammenfassung**

Emulsionen aus einer wässrigen oder einer wässrig-organischen, kontinuierlichen Phase und einer organischen diskontinuierlichen Phase, wobei letztere
a) wenigstens einen organischen Wirkstoff mit einer Wasserlöslichkeit bei 20°C von < 10 g/l, insbesondere < 1 g/l und
b) wenigstens eine organische Verbindung mit einer Wasserlöslichkeit bei 20°C von < 1 g/l, insbesondere < 0,1 g/l ausgewählt aus der Gruppe der Umsetzungsprodukte von Alkylenoxiden mit alkylierbaren Verbindungen, wie z.B. Fettalkohole, Fettamine, Fettsäuren, Phenolen, Alkylphenolen, Carbonsäureamide und Harzsäuren, und
c) gegebenenfalls ein mit Wasser nicht mischbares organisches Lösungsmittel enthalten,
dadurch gekennzeichnet, dass die Komponente a) in b) oder gegebenenfalls in b) und c) zusammen vollständig gelöst mit einem Gehalt von mehr als 0,1 Gew.-%, insbesondere > 1 Gew.-%, besonders bevorzugt > 10 Gew.-% bei 20°C, bezogen auf das Gesamtgewicht der organischen Phase, vorliegt.

## Beschreibung

Die Erfindung betrifft neue wirkstoffhaltige Emulsionen, ein Verfahren zu ihrer Herstellung sowie ihre Verwendung.

Auf verschiedenen Gebieten, wie z.B. dem Pflanzenschutz, Materialschutz oder Pharmagebiet, ist man bestrebt, lagerstabile Wirkstoffkonzentrate herzustellen, welche unmittelbar vor ihrer Anwendung in das Anwendungsmedium in verdünnter Form eingebracht werden können. Viele Wirkstoffe sind jedoch nahezu vollständig wasser-unlöslich bzw. in bevorzugten organischen Lösungsmitteln nur schwer löslich. Man ist aber bestrebt, zunehmend wässrige oder in wässrigen Medien verdünnbare Wirkstoffkonzentrate einzusetzen, wie z.B. Wirkstoffformulierungen in Form von Suspensions- (SC) oder Emulsionskonzentraten (EC). In EC's liegen die Wirkstoffe i.A. in vollständiger Lösung in einem oder mehreren organischen Lösungsmitteln vor, die in Verbindung mit Emulgatoren in Wasser emulgierbar sind. Hinsichtlich ihre Emulsionsstabilität und insbesondere auch hinsichtlich unerwünschter Ausfällung des Wirkstoffes als kristalliner Feststoff in wässrigen Verdünnungen, sind die bekannten Formulierungen von EC's noch verbesserungsfähig. Dies gilt auch hinsichtlich der Erhöhung der Wirkstoffgehalte als auch der Verwendung von biologisch abbaubaren oder gut verträglichen Lösungsmittel.

Mit SC's, insbesondere wässrigen SC's, werden zwar insbesondere wunschgemäß höhere Wirkstoffkonzentrationen erreicht, nachteilig ist jedoch die oft nur mangelnde biologische Wirksamkeit. Selbst Feinstvermahlungen der Wirkstoffe mit mittleren Partikelgrößen im submikronen Bereich erreichen nicht die gewünschte biologische Wirksamkeit.

Die Aufgabe der vorliegenden Erfindung bestand daher darin, ein Formulierungssystem für Wirkstoffe in Form von wirkstoffhaitigen Emulsionen, insbesondere Mikroemulsionen bereitzustellen, das die oben beschriebenen Nachteile überwindet.

Aufgabe ist ferner, Emulsionskonzentrate mit hohen Wirkstoffgehalten auf Basis gut verträglicher Komponenten herzustellen, die bis in die anwendungsmäßig gewünschten hohen Verdünnungen in Wasser ausreichend stabil gegen Flockulation, Sedimentation oder Aufrahmung sowie gegen Auskristallisation oder Ausfällen von Feststoffen (Wirkstoffkristallen) sind.

Die vorliegende Erfindung betrifft daher Emulsionen aus einer wässrigen oder einer wässrig-organischen kontinuierlichen Phase und einer organischen diskontinuierlichen Phase, wobei letztere
a) wenigstens einen organischen Wirkstoff mit einer Wasserlöslichkeit bei 20°C von < 10 g/l, insbesondere < 1 g/l und
b) wenigstens eine organische Verbindung mit einer Wasserlöslichkeit bei 20°C von < 1 g/l, insbesondere <0,1 g/l ausgewählt aus der Gruppe der Umsetzungsprodukte von Alkylenoxiden mit alkylierbaren Verbindungen, wie z.B. Fettalkohole, Fettamine, Fettsäuren, Phenolen, Alkylphenolen, Carbonsäureamide und Harzsäuren, und
c) gegebenenfalls ein mit Wasser nicht mischbares organisches Lösungsmittel enthalten,
dadurch gekennzeichnet, dass die Komponente a) in b) oder gegebenenfalls in b) und c) zusammen vollständig gelöst mit einem Gehalt von mehr als 0,1 Gew.-%, insbesondere > 1 Gew.-%, besonders bevorzugt > 10 Gew.-% bei 20°C, bezogen auf das Gesamtgewicht der organischen Phase, vorliegt.

Unter organischen Wirkstoffen bzw. Wirkstoff-Verbindungen der Komponente a) werden im Rahmen dieser Anmeldungen bevorzugt bioaktive, amorphe oder kristalline synthetische oder natürliche Verbindungen verstanden. Als bioaktive Wirkstoffe seien solche aus der Gruppe der pharmazeutischen Wirkstoffe sowie der Pflanzenschutzmittel, insbesondere Biozide, Mikrobizide, Pestizide, wie Fungizide, Bakterizide, Viruzide, Herbizide, Insektizide, Akarizide, Nematizide, Pflanzenwuchsregulatoren und Vogelrepellents sowie Desinfektionsmittel genannt.

Dabei sind insbesondere Wirkstoffe mit einem Schmelzpunkt oberhalb von 40°C bevorzugt.

Als Beispiele für Fungizide seien genannt:
2-Anilino-4-methyl-6-cyclopropyl-pyrimidin; 2',6'-Dibromo-2-methyl-4'-trifluoromethoxy-4'-trifluoromethyl-1,3-thiazol-5-carboxanilid; 2,6-Dichloro-N-(4-trifluoromethylbenzyl)-benzamid; (E)-2-Methoximino-N-methyl-2-(2-phenoxy-phenyl)-acetamid; Aldimorph, Anilazin, Azaconazol, Azoxystrobin,
Benalaxyl, Benomyl, Bitertanol, Blasticidin-S, Bromuconazole, Bupirimate,
Carbendazim, Carboxin, Chinomethionat (Quinomethionat), Chlorocresol (3-Methyl-4-Chlorophenol), Chlorothalonil, Cymoxanil, Cyproconazole, Carpropamid,
Dichlorophen, Diclobutrazol, Dichlofluanid, Dicloran, Diethofencarb, Difenoconazol, Dimethirimol, Dimethomorph, Diniconazol, Dithianon, Dodine, Drazoxolon, Epoxyconazole, Ethirimol, Etridiazol,
Fenarimol, Fenbuconazole, Fenhexamid, Fenitropan, Fenpidonil, Fenpropidin, Fenpropimorph, Fluazinam, Fludioxonil, Fluquinconazole, Flusilazole, Flusulfamide, Flutolanil, Flutriafol, Fosetyl-Aluminium, Fhthalide, Fuberidazol, Furalaxyl, Guazatine,
Hexaconazol, Hymexazol,
Imazalil, Imibenconazol, Iminoctadin, Iprobenfos (IBP), Iprodion, Isoprothiolan, Iprovalicarb,
Kresoxim-methyl,
Mepanipyrim, Mepronil, Metalaxyl, Metconazol, Methasulfocarb, Methfuroxam, Metiram, Myclobutanil,
Nuarimol,
Ofurace, Oxadixyl, Oxycarboxin,
Penconazol, Pencycuron, Probenazol, Prochloraz, Procymidon, Propiconazole, Propineb, Pyrifenox, Pyrimethanil,
Quintozen (PCNB), Quinoxyfen,
Spiroxamine,
Tebuconazol, Tecloftalam, Tecnazen, Tetraconazol, Thiabendazol, Thicyofen, Thiophanat-methyl, Thiram, Tolylfluanid, Triadimefon, Triadimenol, Triazoxid, Trichlamid, Tricyclazol, Tridemorph, Triflumizol, Triforin, Triticonazol,
Validamycin A, Vinclozolin,
Zineb, Ziram,
2-[2-(1-Chlor-cyclopropyl)-3-(2-chlorphenyl)-2-hydroxypropyl]-2,4-dihydro-[1,2,4]-triazol-3-thion und
1-(3,5-Dimethyl-isoxazol-4-sulfonyl)-2-chlor-6,6-difluor-[1,3]-dioxolo-[4,5-f]-benzimidazol.

Als Beispiele für Bakterizide seien genannt:
Bronopol, Dichlorophen, Nitrapyrin, Octhilinon, Oxytetracyclin, Probenazol, Streptomycin und Tecloftalam.

Als Beispiele für Insektizide, Akarizide und Nematizide seien genannt:
Abamectin, Alanycarb, Aldicarb, Amitraz, Avermectin, AZ 60541, Azocyclotin, 4-Bromo-2-(4-chlorphenyl)-1-(ethoxymethyl)-5-(trifluoromethyl)-1H-pyrrole-3-carbonitril, Bendiocarb, Benfuracarb, Bensultap, Betacyfluthrin, Bifenthrin, BPMC, Brofenprox, Bufencarb, Buprofezin, Butocarboxin, Butylpyridaben,
Carbaryl, Carbofuran, Chlorfluazuron, N-[(6-Chloro-3-pyridinyl)-methyl]-N'-cyano-N-methyl-ethanimidamide, Clofentezin, Cyromazin,
Diafenthiuron, Diazinon, Dichlofenthion, Diethion, Diflubenzuron, Dimethoat,
Dioxathion, Disulfoton,
Emamectin, Esfenvalerat, Ethiofencarb, Ethion, Ethofenprox,
Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazuron, Flucycloxuron, Flufenoxuron, Flufenprox, Fluvalinate, Formothion, Fosthiazat, Fubfenprox, Furathiocarb,
Hexaflumuron, Hexythiazox,
Imidacloprid, Isazophos, Isofenphos, Isoprocarb, Isoxathion, Ivermectin, Lambda-cyhalothrin, Lufenuron,
Mecarbam, Methiocarb, Methomyl, Metolcarb, Milbemectin, Moxidectin,
Naled, NC 184, Nitenpyram,
Omethoat, Oxamyl, Oxydemethon M,
Permethrin, Phenthoat, Phorat, Phosalon, Phoxim, Pirimicarb, Pirimiphos M, Pirimiphos A, Promecarb, Propoxur, Prothoat, Pymetrozin, Pyridaphenthion, Pyrethrum, Pyridaben, Pyrimidifen, Pyriproxifen,
Quinalphos,
Salithion, Sebufos, Silafluofen, Sulfotep, Sulprofos, Spinosad,
Tebufenozide, Tebufenpyrad, Teflubenzuron, Thiacloprid, Thiafenox, Thiamethoxan, Thiodicarb, Thiofanox, Thiomethon, Thionazin, Triazuron, Trichlorfon, Triflumuron, Trimethacarb,
Vamidothion, XMC, Xylylcarb.

Als Beispiele für Herbizide seien genannt:
Acetamiprid, Benzosulfuronmethyl, Cyclosulfamuron, Flucarbazone, Procarbazone, Sodium, Flufenacet, Diflufenican, Propanil, Chloridazon, Norflurazon, Desmedipham, Phenmedipham, Alachlor, Acetochlor, Butachlor, Metazachlor, Metalochlor, Acifluorfen, Bifenox, Chlortoluron, Diuron, Isoproturon, Linuron, Dichlobenil, Ioxynil, Mefenacet, Amidosulfuron, Chlorimuron-ethyl, Chlorsulfuron, Cinosulfuron, Methylsulfuron-methyl, Nicosulfuron, Primisulfuron, Pyrazosulfuronethyl, Thiofensulfuron-methyl, Triasulfuron, Tribenuron-methyl, Atrazin, Cyanazin, Simazin, Metamitron, Metribuzin, Glufosinate und Glyphosate.

Als Beispiele für Pflanzenwuchsregulatoren seien Chlormequat-methyl und Ethephon genannt.

Unter organischen Wirkstoffen werden im Rahmen dieser Anmeldung auch weitere organo-chemische Verbindungen verstanden, die einen Schmelzpunkt von >40°C und eine Löslichkeit in Wasser bei 20°C von vorzugsweise 10 g/l, insbesondere < 1 g/l besitzen. Als solche sind insbesondere Dispersionsfarbstoffe oder Solventfarbstoffe zu nennen, wie sie im Colour Index, 3. Auflage (3. Revision 1987) unter "Disperse Dyes" beschrieben sind, bzw. in Colour Index, 3. Auflage (1982, Pigments and Solvent Dyes) beschrieben sind.

Bevorzugte Dispersionsfarbstoffe sind carbonsäure- und/oder sulfosäuregruppenfreie Nitro-, Amino-, Aminoketon, Ketoninim, Methin-, Polymethin-, Diphenylamin-, Chinolin-, Benzimidazol, Xanthen-, Oxazin-, Cumarin- und insbesondere Anthrachinon- und Azofarbstoffe, wie Mono- und Disazofarbstoffe. Besonders geeignete Dispersionsfarbstoffe können bspw. den Formeln 1) bis 23) aus EP 924335 A1 entnommen werden.

Die organische Verbindung der Komponente b) ist vorzugsweise eine nichtionogene Verbindung ausgewählt aus der Gruppe der Umsetzungsprodukte von Alkylenoxiden mit alkylierbaren Verbindungen, wie z.B. Fettalkoholen, Fettaminen, Fettsäuren, Phenolen, Alkylphenolen, Carbonsäureamiden und Harzsäuren. Hierbei handelt es sich z.B. um Alkylenoxidaddukte aus der Klasse der Umsetzungsprodukte von Ethylenoxid und/oder Propylenoxid mit:
b1) gesättigten und/oder ungesättigten Fettalkoholen mit 6 bis 25 C-Atomen oder
b2) Alkylphenolen mit 4 bis 12 C-Atomen im Alkylrest oder
b3) gesättigten und/oder ungesättigten Fettaminen mit 14 bis 20 C-Atomen oder
b4) gesättigten und/oder ungesättigten Fettsäuren mit 14 bis 22 C-Atomen oder
b5) hydrierten und/oder unhydrierten Harzsäuren, insbesondere Balsamharz oder Abietinsäure und Terpentinharz.
b6) aus natürlichen oder modifizierten, gegebenenfalls hydrierten Rizinusölfettkörper hergestellte Veresterungs- und/oder Arylierungsprodukte, die gegebenenfalls durch Veresterung mit Dicarbonsäuren zu wiederkehrenden Struktureinheiten verknüpft sind.

Weiterhin kommen als Verbindungen der Komponente b) solche aus der Gruppe der oxalkylierten Phenole, insbesondere Phenol/Styrol-Polyglykolether der Formel I) oder der Formel II) in Frage. 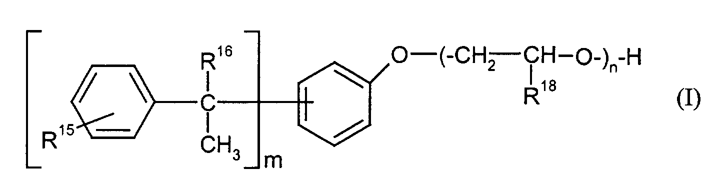 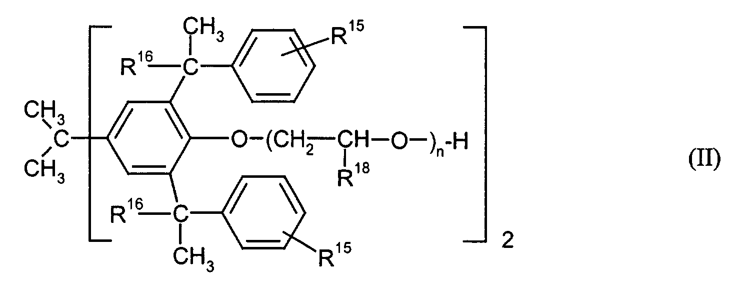 in denen
- R¹⁵: Wasserstoff oder C₁-C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1-4 bedeutet,
- n: eine Zahl von 2-13, insbesondere 2-8 bedeutet,
- R¹⁸: für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht .

Die organischen Verbindungen der Komponente b) seien insbesondere auch als "Lösemittel" für die Wirkstoffe der Komponente a) verstanden, die in Wasser oder wässrig-organischen Medien selber keine oder nur sehr geringe Löslichkeit in einem Temperaturbereich von 10 bis 99°C besitzen; bei Normaltemperatur beträgt die Löslichkeit in Wasser vorzugsweise < 1 g/l, insbesondere < 0,1 g/l.

Besonders bevorzugt weisen die organische Verbindungen (b) auch Eigenschaften als grenzflächenaktive Verbindungen auf, und besitzen bevorzugt einen rechnerischen HLB [HLB: Hydrophilic-Lipophilic-Balance]-Wert von weniger als 12, insbesondere weniger als 10.

Die Auswahl der Verbindungen der Komponente b) richtet sich in erster Linie nach dem Lösevermögen für den jeweilig zu lösenden Wirkstoff der Komponente a) in dem Temperaturbereich von 20 bis 200°C. Bevorzugt ist eine hohe Löslichkeit von a) in b) oder gegebenenfalls a) in b) und c) von > 5 g/l, insbesondere > 10 g/l in dem genannten Temperaturbereich.

Bevorzugte organische Verbindungen der Komponente b) sind solche der Formel I) oder II) sowie Alkylenoxidaddukte der Verbindungen b5) und b6), ganz besonders bevorzugt von Balsamharz oder Abietinsäure.

Die mit Wasser nicht mischbaren organischen Lösungsmittel der Komponente c) besitzen bevorzugt einen Siedepunkt von >100°C, insbesondere > 130°C, und in Wasser eine Löslichkeit von < 1,0 g/l bei 20°C.

Als organische Lösungsmittel (c) kommen bevorzugt natürliche, voll- oder halbsynthetische Verbindungen in Frage sowie gegebenenfalls Mischungen dieser Lösungsmittel, die mit den organischen Verbindungen (b) im Temperaturbereich von 20 bis 130°C vollständig mischbar oder löslich sind. Bevorzugt kommen bei Raumtemperatur flüssige Lösungsmittel in Betracht aus der Gruppe der aliphatischen, cycloaliphatischen oder aromatischen Kohlenwasserstoffe, insbesondere
- Öle, wie z.B. Mineralöle, Paraffine, Isoparaffine, vollsynthetische Öle wie Silikonöle, halbsynthetische Öle auf Basis z.B. Glyceride mittlerer und ungesättigter Fettsäuren, etherische Öle,
- Ester von natürlichen oder synthetischen, gesättigten oder ungesättigten Fettsäuren, vorzugsweise C₈-C₂₂- insbesondere C₅-C₁₈-Fettsäuren, besonders bevorzugt Rapsölmethylester oder 2- Ethylhexyllaurat,
- alkylierte Aromaten und deren Gemische,
- alkylierte Alkohole insbesondere Fettalkohole,
- durch Hydroformylierung gewonnene lineare, primäre Alkohole,
- Terpenkohlenwasserstoffe und
- naphthenische Öle wie z.B. Enerthene.

Weitere bevorzugte Lösungsmittel der Komponente c) sind solche aus der Gruppe der acetatischen Lösungsmittel wie z.B. 1,2-Propandioldiacetat, 3-Methyl-3-methoxybutylacetat, Essigsäureethylester, etc.. Die Lösungsmittel können einzeln oder in Gemischen untereinander eingesetzt werden.

Neben den Komponenten a) bis c) kann die organische diskontinuierliche Phase der erfindungsgemäßen Emulsionen noch weitere Zusatzstoffe enthalten, welche in Wasser eine Löslichkeit von < 0,1 g/l, in den Komp. b) und/oder c) jedoch eine Löslichkeit von > 10 g/l besitzen.

Besonders in Frage kommen dabei Verbindungen aus der Gruppe der
- Sorbitanester wie z.B. SPAN® , ICI
- Block- und Blockcopolymere auf Basis von Ethylen- und/oder Propylenoxid wie z.B. Pluronic® , BASF
- Block- und Blockcopolymere von Ethylen- und/oder Propylenoxid auf bifunktionellen Aminen wie z.B. Tetronic® , BASF
- Blockcopolymere auf Basis (Poly)stearinsäure und (Poly)Alkylenoxid wie z.B. Hypermer® B, ICI
- Polyvinylpyrrolidon und - Copolymere mit einem Molekulargewicht von > 100000 g/mol wie z.B. Luviskol K® , BASF sowie
- organische Additive zur Geruchsüberdeckung u/o Verhinderung von Feststoffauskristallisation, insbesondere Cholesterin und/oder Vanillin, Verbindungen aus der Gruppe der Terpene, Terpenoide, Fettsäuren und Fettsäureester, sowie insbesondere aus der Gruppe der etherischen Öle wie z.B. Eucalyptol und andere parfümische Verbindungen, insbesondere weitere Parfümöle.

In einer bevorzugten Zusammensetzung enthält die organische diskontinuierliche Phase der erfindungsgemäßen Emulsionen, bezogen auf die gesamte diskontinuierliche Phase,
a) 0,5 bis 40 Gew.-%, insbesondere 1 bis 20 Gew.-% wenigstens eines organischen Wirkstoffes, insbesondere bio-aktiven Wirkstoffes,
b) 20 bis 99,5 Gew.-%, insbesondere 40 bis 99 Gew.-% wenigstens einer organischen Verbindung der Komponente b) und
c) 0 bis 80 Gew.-% eines organischen Lösungsmittels der Komponente c).
   Die kontinuierliche wässrige bzw. wässrige-organische Phase (= Trägerphase der Emulsionströpfchen) der erfindungsgemäßen Wirkstoff-haltigen Emulsionen oder Mikroemulsionen enthält vorzugsweise
d) Wasser,
e) gegebenenfalls organisches Lösungsmittel,
f) wenigstens ein natürliches oder synthetisches oberflächenaktives Mittel, das in Wasser (d) eine Löslichkeit von > 10 g/l, insbesondere > 100 g/l bei 20°C besitzt
sowie gegebenenfalls weitere Zuschlagstoffe.

Als organische Lösungsmittel der Komponente (e) kommen bevorzugt in Wasser lösliche oder mischbare Lösungsmittel in Betracht, insbesondere mit einer Löslichkeit in Wasser von > 5,0 g/l bei 20°C, insbesondere > 15 g/l.

Geeignete organische Lösungsmittel sind beispielsweise:
aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon,Methylisobutylketon oder Diacetonalkohol, Polyole, wie Ethylenglykol, Propylenglykol, Butylenglykol, 1,4-Butandiol, 1,5-Pentandiol, 1,6-Hexandiol, Diethylenglykol, Triethylenglykol, Trimethylolpropan, Polyethylenglykol oder Polypropylenglykol mit einem mittl. Molgewicht von 100 bis 4000 g/mol, vorzugsweise 200 bis 1500 g/mol, oder Glycerin, Monohydroxyether, vorzugsweise Monohydroxyalkylether, besonders bevorzugt Mono-C₁-C₄-alkylglykolether wie Ethylenglykolmonoethyl- oder -monomethylether, Diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-Pyrrolidon, N-Ethyl-Pyrrolidon, N-Vinylpyrrolidon, 1,3-Dimethyl-imidazolidon, Dimethylacetamid sowie Dimethylformamid.

Es kommen auch Gemische von Lösungsmitteln, beispielsweise der genannten, in Frage. Die Menge der eingesetzten Lösungsmittel (e) in der wässrigen kontinuierlichen Phase beträgt i.A. weniger als 60 Gew.-%, vorzugsweise weniger als 40 Gew.-%, bezogen auf die kontinuierliche Phase.

Als oberflächenaktive Mittel (f) werden vorzugsweise in der wässrigen Phase vollständig lösliche Emulgatoren, Netzmittel, Dispergiermittel, Entschäumer oder Lösungsvermittler verstanden. Insbesondere können sie nicht-ionogen, anionogen, katiogen oder amphoter sein bzw. monomerer, oligomerer oder polymerer Natur sein. Die Auswahl der oberflächenaktiven Mittel (f) ist erfindungsgemäß nicht eingeschränkt und muß auf die zu stabilisierende diskontinuierliche Phase enthaltend die Komponenten a), b) und gegebenenfalls c) im Hinblick auf die gewünschte Art der Emulsion (z.B. Miniemulsion oder Mikroemulsion) sowie die Emulsionstabilität, insbesondere gegen Sedimentation und/oder Aufrahmung der dispersen Phase, abgestimmt werden.

Als bevorzugte oberflächenaktive Mittel der Komponente (f) sind solche von f1) bis f10) zu nennen:
f1) Oxalkylierungsprodukte, die durch Alkoxylierung mit Ethylenoxid oder Propylenoxid von Kondensationsprodukten phenolischer OH-gruppenhaltiger Aromaten mit Formaldehyd und NH-funktionellen Gruppen erhältlich sind.
f2) Wasserlösliche anorganische Salze, insbesondere Borate, Carbonate, Silikate, Sulfate, Sulfite, Selenate, Chloride, Fluoride, Phosphate, Nitrate und Aluminate der Alkali- und Erdalkalimetalle und anderer Metalle, sowie Ammonium;
f3) Polymere, aufgebaut aus wiederkehrenden Succinyl-Einheiten, insbesondere Polyasparaginsäure.
f4) nicht-ionische oder ionisch modifizierte Verbindungen aus der Gruppe der Alkoxylate, Alkylolamide, Ester, Aminoxide und Alkylpolyglykoside, insbesondere
   Umsetzungsprodukte von Alkylenoxiden mit alkylierbaren Verbindungen, wie z.B. Fettalkoholen, Fettaminen, Fettsäuren, Phenolen, Alkylphenolen, Carbonsäureamiden und Harzsäuren. Hierbei handelt es sich z.B. um Ethylenoxidaddukte aus der Klasse der Umsetzungsprodukte von Ethylenoxid mit:
   m) gesättigten und/oder ungesättigten Fettalkoholen mit 6 bis 25 C-Atomen oder
   n) Alkylphenolen mit 4 bis 12 C-Atomen im Alkylrest oder
   o) gesättigten und/oder ungesättigten Fettaminen mit 14 bis 20 C-Atomen oder
   p) gesättigten und/oder ungesättigten Fettsäuren mit 14 bis 22 C-Atomen oder
   q) hydrierten und/oder unhydrierten Harzsäuren,
   r) aus natürlichen oder modifizierten, gegebenenfalls hydrierten Rizinusölfettkörper hergestellte Veresterungs- und/oder Arylierungsprodukte, die gegebenenfalls durch Veresterung mit Dicarbonsäuren zu wiederkehrenden Struktureinheiten verknüpft sind.
f5) ionische oder nicht-ionische Verbindungen aus der Gruppe der Umsetzungsprodukte von Alkylenoxid mit Sorbitanester [Tween®, ICI], oxalkylierte Acetylendiole und -glykole, oxalkylierte Phenole, insbesondere Phenol/Styrol-Polyglykolether gemäß Formel I) und II) mit dem Unterschied, dass n eine Zahl von 14 bis 120 ist, und ionisch modifizierte Phenol/Styrol-Polyglykolether der Formel I) oder II) wie beispielsweise in EP-A 839 879 offenbart [bzw. EP-A-764 695]. Unter dem Begriff "ionische Modifizierung" wird beispielsweise Sulfatierung, Carboxylierung oder Phosphatierung verstanden. Ionisch modifizierte Verbindungen können entweder in Form ihrer freien Säuren oder vorzugsweise als Salz, insbesondere als Alkali- oder Aminsalz, vorzugsweise Diethylaminsalz vor.
f6) ionische oder nichtionische polymere oberflächenaktive Mittel aus der Gruppe der Homo- und Copolymerisate, Pfropf- und Pfropfcopolymerisate sowie statistische und lineare Blockcopolymerisate.
   Beispiele geeigneter polymerer oberflächenaktive Mittel (f6) sind Polyethylenoxide, Polypropylenoxide, Polyoxymethylene, Polytrimethylenoxide, Polyvinylmethylether, Polyethylenimine, Polyacrylsäuren, Polyarylamide, Polymethacrylsäuren, Polymethacrylamide, Poly-N,N-dimethyl-acrylamide, Poly-N-isopropylacrylamide, Poly-N-acrylglycinamide, Poly-N-methacrylglycinamide, Polyvinyloxazolidone, Polyvinylmethyloxazolidone.
f7) anionische oberflächenaktive Mittel wie beispielsweise Alkylsulfate, Ethersulfate, Ethercarboxylate, Phosphatester, Sulfosuccinatamide, Paraffinsulfonate, Olefinsulfonate, Sarcosinate, Isothionate und Taurate.
f8) anionische oberflächenaktive Mittel aus der Gruppe der sog. Dispergiermittel, insbesondere Kondensationsprodukte, die durch Umsetzung von Naphtholen mit Alkanolen, Anlagerung von Alkylenoxid und mindestens teilweiser Überführung der terminalen Hydroxygruppen in Sulfogruppen oder Halbester der Maleinsäure, Phthalsäure oder Bernsteinsäure erhältlich sind, Sulfobernsteinsäureester, Alkylbenzolsulfonate, sowie Salze der Polyacrylsäuren, Polyethylensulfonsäuren, Polystyrolsulfonsäure, Polymethacrylsäuren, Polyphosphorsäuren.
f9) ligninische Verbindungen, vor allem Ligninsulfonate, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder disulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht von größer 1000 bis 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.
f10) amphotere oberflächenaktive Mittel wie Betaine und Ampholyte, insbesondere Glycinate, Propionate und Imidazoline.
   Besonders bervorzugt sind Betaine auf Basis von Borsäureestern der allgemeinen Formel XV 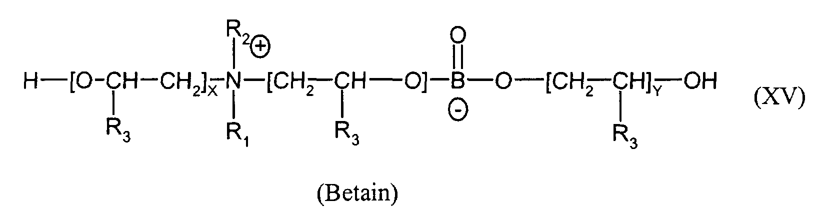 mit
   - x,y: eine Zahl von 1 bis 50, insbesondere 2 bis 30,
   - R₁, R₂: lineares oder verzweigtes C6-C18-Alkyl und
   - R₃: für jede durch x oder y indizierte Einheit gleich oder verschieden ist und für Wasserstoff, CH₃ oder Phenyl steht, wobei im Falle der Mitanwesenheit von CH₃ in den verschiedenen -(-CH₂-CH(R³)-O-)-Gruppen in 0 bis 60 % des Gesamtwertes von n R³ für CH₃ und in 100 bis 40 % des Gesamtwertes von n R³ für Wasserstoff steht und wobei im Falle der Mitanwesenheit von Phenyl in den verschiedenen -(-CH₂-CH(R³)-O-)-Gruppen in 0 bis 40 % des Gesamtwertes von n R³ für Phenyl und in 100 bis 60 % des Gesamtwertes von n R³ für
   Wasserstoff steht.

In einer besonders bevorzugten Ausführungsform kann die kontinuierliche wässrige Phase zusätzlich zu den genannten oberflächenaktiven Mitteln f), insbesondere f1) bis f10) noch wasserlösliche Block- oder Blockcopolymere der Komponente g) enthalten; bevorzugt handelt es sich dabei um wasserlösliche Block- und Block-copolymere auf Basis von Ethylen- und/oder Propylenoxid [Pluronic® , BASF] und/ oder wasserlösliche Block- und Blockcopolymere von Ethylen- und/oder Propylenoxid auf bifunktionellen Aminen [Tetronic® , BASF].

Block-Copolymere auf Basis von Polystyrol und Polyalkylenoxid, Poly(meth)-acrylaten und Polyalkylenoxid sowie Poly(meth)acrylaten und Poly(meth)acrylsäuren kommen ebenfalls in Frage.

Die kontinuierliche wässrige Phase kann darüberhinaus noch weitere übliche Zuschlagstoffe enthalten wie z.B. wasserlösliche Netzmittel, Entschäumer und/oder Konservierungsmittel.

Die erfindungsgemäßen Emulsionen enthalten vorzugsweise, bezogen auf die gesamte Emulsion,
1 bis 40 Gew.-%, insbesondere 2 bis 20 Gew.-% der diskontinuierlichen organischen Phase und
60 bis 99 Gew.-% der kontinuierlichen wässrigen oder wässrig-organischen Phase.

Bevorzugte Zusammensetzungen der Emulsionen enthalten, bezogen auf die diskontinuierliche organische Phase,
0 bis 2000 Gew.-%, insbesondere 1 bis 1000 Gew.-%, vorzugsweise 10 bis 1000 Gew.-% eines oder mehrere wasserlösliche oberflächenaktive Mittel der Komponente (f),
0 bis 100 Gew.-%, insbesondere 1 bis 50 Gew.-% eines oder mehrere wasserlösliche Block-Copolymere der Komponente (g) und
0 bis 600 Gew.-%, insbesondere 20 bis 400 Gew.-% eines oder mehrere wasserlösliche organische Lösungsmittel der Komponente (e) sowie
gegebenenfalls weitere übliche Zuschlagstoffe.

Liegen die Emulsionen als Mikroemulsionen vor, so enthalten sie, bezogen auf die diskontinuierliche organische Phase, vorzugsweise
10 bis 2000 Gew.-%, insbesondere 100 bis 1000 Gew.-% eines oder mehrere wasserlösliche oberflächenaktive Mittel der Komponente (f),
0 bis 100 Gew.-%, insbesondere 1 bis 50 Gew.-% eines oder mehrere wasserlösliche Block-Copolymere der Komponente (g) und
0 bis 600 Gew.-%, insbesondere 20 bis 400 Gew.-% eines oder mehrere wasserlösliche organische Lösungsmittel der Komponente (e) sowie
gegebenenfalls weitere übliche Zuschlagstoffe.

Als bevorzugte Emulsionstypen sind zu nennen:

| | |
|---|---|
| Makroemulsion | enthält Tropfen > 2 µm (mikroskopisch) |
| Miniemulsion | Tropfendurchmesser 0,1 bis 2 µm, vorzugsweise trüb |
| Mikroemulsion | Tropfendurchmesser < 0,1 µm, vorzugsweise transparent |

Mikroemulsionen sind dabei besonders bevorzugt.

Durch die Erfindung ist es überraschenderweise gelungen, besonders hohe Gehalte an Wirkstoffen in der diskontinuierlichen Phase - sprich den Emulsionströpfchen - bei Normaltemperatur (20°C) stabil in Lösung zu halten. Insbesondere im Falle von Mikroemulsionen (d.h. klare Emulsionen) konnten an Wirkstoffen (a) erheblich höhere Gehalte erreicht werden, als die bei Normaltemperatur (20°C) bestimmte Grenz-Löslichkeit der reinen Wirkstoffe (a) in den organischen Verbindungen (b) und ggf. Lösungsmittel (c) erwarten ließ. Ebenso überraschend wurde gefunden, dass mit den erfindungsgemäßen Mikroemulsionen die Wirkstoffdiffusion in ein umgebendes Medium, z.B. Umgebungsluft, nahezu vollständig verhindert werden kann. Die Erfindung ist daher auch geeignet, die Flüchtigkeit von Wirk- oder Arbeitsstoffen, insbesondere gesundheitsgefährdender oder geruchsbelästigender Stoffe, zu vermindern oder gar zu verhindern.

Die Erfindung beinhaltet daher auch ein Verfahren zur Herstellung der erfindungsgemäßen wirkstoffhaltigen Emulsionen beispielsweise der Makro- oder Mikroemulsionen, in dem der jeweilige Wirkstoff (a) in der organischen Verbindung (b) gegebenenfalls unter Mitverwendung des Lösungsmittels c) bei einer Temperatur von 20 bis 200°C vollständig gelöst wird, die Lösung gegebenenfalls in dem genannten Temperaturbereich heiß filtriert wird, und anschließend die erhaltene Lösung, selbstverständlich unter Einhaltung der für die vollständige Löslichkeit des Wirkstoffes erforderliche Temperatur, in die wässrige bzw. wässrig-organische Phase emulgiert wird, die erhaltene Emulsion beispielsweise Makro- oder Mikroemulsion auf eine Temperatur von 10 bis 70°C, vorzugsweise unter 60°C abgekühlt wird und gegebenenfalls abschließend filtriert wird.

Das Verfahren kann auch in Form der sog. Umkehremulsion durchgeführt werden, in dem zunächst ein Teil der wässrigen bzw. wässrig-organischen Phase in die wirkstoffhaltige (Öl)phase eingebracht und emulgiert wird (Typ W/O-Emulsion) und anschließend durch sukkzessives Auffüllen mit dem Rest der wässrigen Phase in die gewünschte Emulsion (Typ O/W-Emulsion) überführt wird.

Zur Dispergierung (Emulgierung) kommen Verfahren in Betracht wie Rühren, Dissolveremulgieren, Emulgieren mittels Rotor-Stator-Maschinen, Ultraturrax, Hochdruckhomogenisator, Strahldispergierung und Ultraschallbehandlung. Die Wahl der Methode ist abhängig von der gewünschten Feinverteilung der diskontinuierlichen Phase (Makroemulsion, Miniemulsion oder Mikroemulsion).

Die Verfahren können sowohl in Batch- als auch in kontinuierlicher Form zur Anwendung kommen, i.A. wird eine kontinuierliche Verfahrensführung bevorzugt, da hierbei die beiden Phasen gegebenfalls unter Druck und Scherenergieeintrag auf kleinem Raum intensiv vermischt und emulgiert werden können und unmittelbar anschließend auf die für die Stabilisierung der Emulsion (im Hinblick auf Ausfällung des Wirkstoffes aus der diskontinuierlichen Phase (bzw. aus der organischen Verbindung b)) in kürzest möglicher Zeit abgekühlt werden kann. Besonders bevorzugt wird eine kontinuierliche Verfahrensführung zur Erzielung von Mikroemulsionen oder Miniemulsionen mit einer maximalen Tropfengröße der diskontinuierlichen Phase von < 1 µm, insbesondere < 0,5 µm, ganz besonders < 0,1 µm. Im Allgemeinen werden zunächst beide Phasen getrennt hergestellt beispielsweise durch Lösen und Rühren der Komponenten gegebenenfalls unter Temperaturerhöhung sowie anschließender gegebenenfalls kontinuierlicher Zuführung in eine Emulgiervorrichtung.

Bevorzugt werden Verfahren, in dem die Emulgierung unter hohem Energieeintrag erfolgt, beispielsweise Ultraschall-, Hochdruckhomogenisierung oder Strahldispergierung bei Drücken von 2 bis 2500 bar, insbesondere 20 bis 1000 bar, in einer oder mehreren Passagen. Das besonders bevorzugte Strahldispergierverfahren sowie geeignete Vorrichtungen dafür sind beispielsweise in DE-A 19536 845 erläutert. Insbesondere können nach diesem Verfahren und geeigneter Temperaturführung Mikroemulsionen erhalten werden mit besonders großer Langzeitstabilität und sehr hohem Wirkstoffgehalt, die in die unten genannten Anwendungen eingebracht werden können.

Die Endeinstellung auf die gewünschten Eigenschaften wie Viskosität, Fließverhalten und Konservierung kann sowohl vor, während oder nach der Emulgierung durch Zugabe von Wasser oder weitere Zusatzstoffe erfolgen.

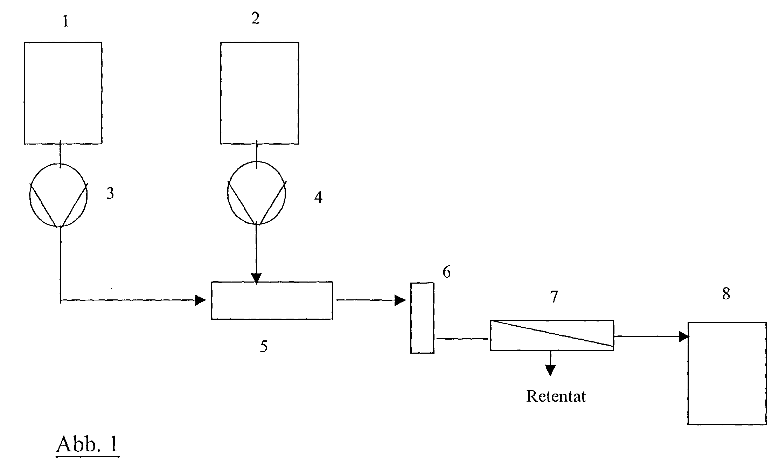

Eine bevorzugte kontinuierliche Verfahrensführung gegebenenfalls unter Mitanwendung des Strahldispergierverfahrens ist in Abb. 1 dargestellt. In zwei gegebenenfalls beheizten und gerührten Vorlagen 1 und 2 werden jeweils die diskontinuierliche und kontinuierliche (wässrige) Phase getrennt hergestellt und anschließend mittels Pumpen 3 und 4 in einer Mischdüse 5 zusammengeführt und emulgiert, anschließend - gegebenenfalls nach Abkühlung über bspw. einen Wärmetauscher 6 und gegebenenfalls Filtration über eine Mikrofiltrationseinheit 7 - in Behälter 8 eingebracht.

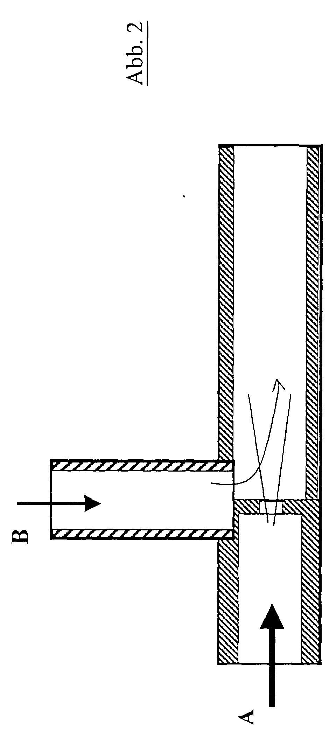

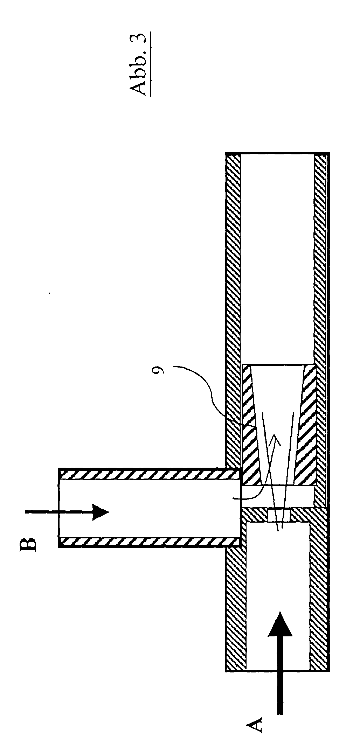

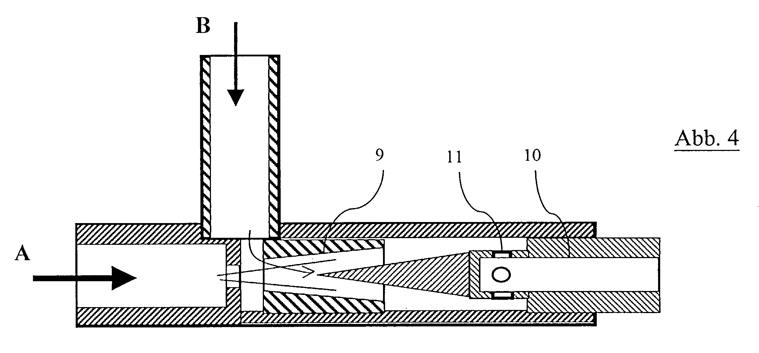

Besondere Ausführungsformen der Mischdüse 5 sind in Abb. 2, 3 und 4 dargestellt. Hierin bezeichnet A die kontinuierliche und B die diskontinuierliche Phase. Besonders bevorzugt wird die in Abb. 4 dargestellte dreistufige Mischdüse, in der unmittelbar an die Mischkammer 9 eine Homogenisiervorrichtung 10 angeschlossen ist, in der bei einem Vordruck in der Mischkammer von i.A. 2 - 200 bar die Voremulsion über feine Bohrungen 11 auf einen niedrigeren Druck, i.A. nahe Atmosphärendruck entspannt wird.

Die erfindungsgemäßen Emulsionen können einer Vielzahl von Verwendungsmöglichkeiten zugeführt werden, wovon beispielhaft einige aufgezählt seien:

Eine Verwendung im Bereich des Materialschutzes, insbesondere Holzschutzes ist dadurch gekennzeichnet, dass erfindungsgemäße wirkstoffhaltige Emulsionen auf Basis von bioaktiven, insbesondere organischen fungiziden Wirkstoffen als Komponente a) in wasser-basierende Bindemittellösungen oder -dispersionen feinteilig mittels der oben genannten Verfahren dispergiert werden. Die erfindungsgemäßen wirkstoffhaltigen Emulsionen zeichnen sich dabei durch hohe chemische (z.B. hydrolytische) und physikalische Stabilität in Verbindung mit einer für die Wirkstoffentfaltung sehr guten Feinverteilung aus und sind daher rein wässrigen Formulierungen der Wirkstoffe weit überlegen. Die Wirkstoffe penetrieren außerdem tief und dauerhaft in das Holz. Besonders bevorzugt ist dabei die Verwendung der wirkstoffhaltigen Emulsionen zur fungiziden Ausrüstung von Holz, insbesondere Frischholz sowie zur Imprägnierung. Hierbei werden erfindungsgemäße Emulsionen in Form von Konzentraten in Wasser auf eine gewünschte Wirkstärke verdünnt und diese Verdünnungen mittels Tauch-, Streich- oder Kesseldruck-Imprägnierverfahren auf Holz aufgebracht, wobei vor allem erfindungsgemäße Emulsionen in Form von Mikroemulsionen sich durch eine gute Wirkstoffpenetration und Wirkstofflangzeitstabiltät auszeichnen.

Die Anwendung der erfindungsgemäßen Emulsionen auf dem Agrogebiet ist beispielsweise dadurch gekennzeichnet, dass die Emulsionen auf Basis von bioziden Wirkstoffen als Komponente a) in Wasser durch Rühren, Schütteln, Umpumpen etc. in einer Konzentration von weniger als 10, vorzugsweise weniger als 5 und insbesondere weniger als 2 Gew.-% dispergiert werden und in der Regel durch Pumpen-Spritzen auf Pflanzen- und Anbauflächen ausgebracht werden. Dabei sind die Präparationen sehr gut verträglich und in den dargelegten Verdünnungsbereichen im Vergleich mit Suspensionskonzentraten deutlich dispersionsstabiler. Überraschenderweise wurde gefunden, dass sie besonders gut die Pflanzenoberflächen benetzen und nach Trocknung einen ausreichend wasserfesten Film bilden, in dem die Wirkstoffe über einen ausreichend langen Zeitraum gebunden sind.

Mit den erfindungsgemäßen Emulsionen oder Mikroemulsionen können ganz allgemein emissionsarme, insbesondere geruchsarme u/o -freie Wirkstoffformulierungen hergestellt werden.

Enthalten die erfindungsgemäßen Emulsionen als Wirkstoffe Dispersions- oder Solventfarbstoffe, so können sie grundsätzlich zum Färben von natürlichen oder synthetischen Materialien verwendet werden.

Eine bevorzugte Verwendungsform derartiger "farbstoffhaltiger" Emulsionen ist der sog. Ink-Jet-Druck.

Der Ink-Jet-Druck ist an sich bekannt und erfolgt im Allgemeinen so, dass die Drucktinte in ein Aufnahmegefäß eines Tintenstrahl-Druckkopfes gefüllt wird und in kleinen Tröpfchen auf das Substrat gesprüht wird. Der Tintenausstoß in Tröpfchenform erfolgt dabei vorzugsweise über einen piezoelektrischen Kristall, eine beheizte Kanüle (Bubble- oder Thermo-Jet-Verfahren) oder mechanische Druckerhöhung, wobei Druck auf das Tintensystem ausgeübt wird und so Tintentropfen herausgeschleudert werden. Dabei werden die Tröpfchen aus einer oder mehreren kleinen Düsen gezielt auf das Substrat wie z.B. Papier, Holz, Textilien, Kunststoff oder Metall geschossen. Durch elektronische Aussteuerung werden die einzelnen Tröpfchen auf dem Substrat zu Schriftzeichen oder graphischen Mustern zusammengefasst.

Möglich ist auch ein Verfahren, bei dem mittels elektrostatischer Ablenkung aus einem Tintenstrahl kleinste Volumina in Form von Tropfen auf ein Subsrat gebracht werden.

Eine Methode zur Verwendung der erfindungsgemäßen farbstoffhaitigen Emulsionen als Drucktinten ist vorzugsweise dadurch gekennzeichnet, dass die Drucktinten unter Tropfenbildung kontinuierlich oder diskontinuierlich auf ein Substrat gesprüht werden. Insbesondere ist das Verfahren dadurch gekennzeichnet, dass zur Erzeugung der Tropfen das computergesteuerte thermische oder piezoelektrische Ink-Jet-Druck-Verfahren verwendet wird.

Bevorzugt ist die Verwendung der Drucktinten, dadurch gekennzeichnet, dass als Substrate beschichtete und unbeschichtete Papiere, Fotopapiere, polymere Filme, Folien sowie Textilien, Glas und Metall verwendet werden. Die Emulsionen, insbesondere Mikroemulsionen, die als Drucktinten verwendet werden, erzeugen dabei besonders brillante, farbstarke Drucke, die in ihrer Wasser- und Lösemittelechtheit (Markerechtheit) herkömmliche Drucktinten auf Basis löslicher Farbstoffe oder auch Pigmenten weit überlegen sind.

Die farbstoffhaltigen Emulsionen können auch als Farbmittel für den Ink-Jet-Druck zwecks Übertragung von Dispersionsfarbstoffen, insbesondere carbonsäure- und/oder sulfosäuregruppenfreie Anthrachinon-, Azo- und/oder Indoanilin-Typ Dispersionsfarbstoffe auf einen Träger bzw. ein Farbband für den Thermotransferdruck verwendet werden. Beim Thermotransferdruck wird ein farbabgebender Träger (Farbband, donor ribbon) und eine Farbstoffnehmerschicht (receiver, i. A. Papier, polymer beschichtetes (z.B. PES, PVC) Papier oder Polymere Filme oder Karten) mittels glatten Rollen in engen Kontakt mit einem Heizkopf (Temperatur > = 300°C) gebracht. Der Farbstoff transferiert innerhalb von wenigen msec infolge thermisch indizierter Diffusion entlang einem Konzentrationsgefälle vom Farbband in bzw. auf die zu bedruckende Farbstoffnehmerschicht.

Die aufgenommene Farbmenge wird dabei über Dauer und Höhe der Aufheizung bestimmt. Als Farbstoffnehmerschicht kommen prinzipiell alle temperaturstabilen Kunsstoffschichten mit Affinität zu den transferierenden Farbstoffen in Betracht, deren Glasumwandlungstemperatur vorzugsweise im Temperaturbereich von 50 bis 100°C liegt, insbesondere Polyester und Polycarbonate. Oft wird das Substrat nach der Beschichtung mit einem polymeren Film zum Schutz vor Abrasion beschichtet.

Die Methode des Thermotransferdruckes kann bspw. auch in "Ullmann's Encyclopedia of Industrial Chemistry", Sixth Edition, 1999 Electronic Release nachgelesen werden.

Für die Bedruckung des Trägers oder Farbbandes mittels Ink-Jet-Verfahren können die farbstoffhaltigen Emulsionen entweder ohne weitere Zusätze oder aber in wässriger Mischung mit einem polymeren Bindemittel und gegebenenfalls zusätzlichem wasserlöslichen Lösungsmittel eingesetzt werden. Als polymere Bindemittel kommen bspw. solche auf Basis von Polyisocyanaten oder Polyacrylaten sowie insbesondere Ethylcellulose, Ethylhydroxyethylcellulose, Polyvinylbutyrat oder Polyvinylacetat in Frage.

### Beispiele

### Beispiel 1 bis 14 siehe Tabelle 1 und 2

Zur Herstellung der diskontinuierlichen organische Phase wurden organische Wirkstoffe der Komponente a) gegebenenfalls unter erhöhter Temperatur in organische Verbindungen der Komponente b) und gegebenenfalls Lösungsmittel der Komponente c) vollständig gelöst.

Die so erhaltene Ölphase wurde anschließend mittels Schnellrührer unter Beihaltung der Temperatur in jeweilige wässrig-organische, kontinuierliche Phasen eingetragen und ca. 0,5 Minuten dispergiert.

In Tabelle 1 und Tabelle 2 sind die Zusammensetzungen der sowie die Beurteilung der erhaltenen Emulsionen wiedergegeben.

Die Emulsionen der Beispiele 1 bis 12 zeichnen sich vorallem auch dadurch aus, dass der Gehalt der in der emulgierten Ölphase gelösten Feststoffe bei Raumtemperatur deutlich oberhalb der Löslichkeitsgrenze der Feststoffe in der reinen (nicht-emulgierten) Ölphase liegt. Die beobachtete geringfügige handlingsbedingte Rekristallisation unter Normaltemperatur kommt nach einer kurzen Zeit zum Stillstand. Durch kontinuierliche Verfahrensführung, wie in Beispielen 15, 16 und 17 beschrieben, kann sie ganz vermieden werden.

Die Emulsionen gemäß Beispiel 1-12 ließen sich leicht mit Konzentrationen bis unterhalb von 0,1 Gew.-% in Leitungswasser z.B. durch Schütteln oder Rühren eintragen und ergaben dabei homogene Dispersionen (Spritzbrühen), die sowohl gegen Sedimentation der Wirkstoffe als auch Aufrahmung einer Ölphase mehr als 3 Tage stabil waren. Die gute Dispersionstabilität der Spritzbrühen wurde auch unter der Bedingung fortlaufender Scherung und Umpumpung gewahrt.

Diese Feststoffpräparation war deshalb besonders geeignet zur Ausbringung mittels landwirtschaftlich üblichen Spritzgeräten bei gleichzeitig guter Verträglichkeit und besonders hoher biologischer Wirksamkeit.

Erläuterungen:
Wirkstoffe der Komponente a)
   - Wirkstoff 1:: Pflanzenschutzwirkstoff
   3- 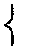 1-{[-(4-<2-chlorophenoxy-5-fluoropyrimid-6-yloxy)-phenyl]-1-(methoxiimno)-methyl 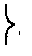 -5,6-dihydro-1,4,2-dioxazin der Formel 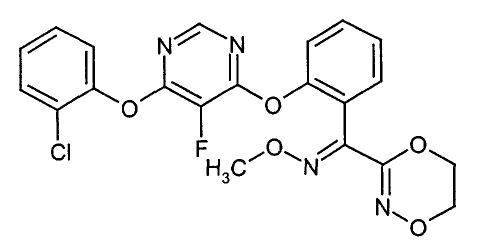 bekannt aus WO-A-97-27189,
   - Wirkstoff 2:: Fungizid Tebuconazol (Folicur®, Bayer AG) mit einer Restfeuchte von <1 Gew.-%,
   - Wirkstoff 3:: Fungizid Propiconazol (WOCOSEN® Technical, Fa. Janssen)
Verbindungen der Komponente b)
   - Verbindung 1:: Verbindung gemäß Formel I) mit R₁₅, R₁₆, R₁₈ = H, m = 2,7 und n = 10
   - Verbindung 2:: Verbindung auf Basis Balsamharz umgesetzt mit im statistischen Mittel 5 Mol Einheiten Ethylenoxid pro Mol Balsamharz
   - Verbindung 3:: Verbindung auf Basis von Laurylalkohol umgesetzt, mit im statistischen Mittel 3 Mol Einheiten Ethylenoxid pro Mol Laurylalkohol.
Oberflächenaktive Mittel der Komponente f)
   - Emulgator® KS:: alkoxylierter Rizinusölfettkörper, Bayer AG
   - Statexan® NA 36%ig:: alkoxylierter, sulfatierter Fettalkohol, Bayer AG 36 %ige wässrige Lösung, mittels verdünnter NaOH auf pH 8,5 eingestellt
   - Atlox® 4894:: alkoxylierter Fettalkohol, Fa. ICI
   - Impralit® TSK 17:: Verbindung gemäß Formel XV, Fa. Rütgers Organics 32 %ige wässrige Lösung
   - Dispergiermittel VPSP25031:: ionisch modifizierter Phenol/Styrol-Polyglykolether hergestellt wie in Beispiel 10, von WO-A-9937718 beschrieben
Block-Copolymer der Komponente g)
   - Pluronic® PE 6800:: Polyethylenoxid-Polypropylenoxid-Block-Copolymer, BASF AG

### Beispiel 15 Kontinuierliche Herstellung von Mikroemulsionen

Mit dem in Abb. 1 dargestellten Verfahren unter Verwendung einer dreistufigen Mischdüse gemäß Abb. 4, in der ein Strahldispergator (Homogenisierdüse) mit 0,2 mm Bohrungen integriert war, wurde eine Mikroemulsion der Zusammensetzung gemäß Beispiel 5 hergestellt. Die Herstellung und Zusammensetzung der diskontinuierlichen und kontinuierlichen Phase entsprach ebenso Beispiel 5, der Vordruck in der Mischkammer 7 betrug 12 bar. Die Temperaturführung der diskontinuierlichen Phase erfolgte mit ca. 90 bis 115°C bis zum Eintritt in die Mischkammer 7, die Temperatur der kontinuierlichen Phase betrug 24 °C.

Die erhaltene Mikroemulsion war über mehr als 4 Wochen vollständig stabil und zeigte keine Form von Rekristallisation.

### Beispiel 16 Kontinuierliche Herstellung von Mikroemulsionen

Mit dem in Abb. 1 dargestellten Verfahren unter Verwendung einer dreistufigen Mischdüse gemäß Abb. 4, in der ein Strahldispergator (Homogenisierdüse) mit 0,2 mm Bohrungen integriert war, wurde eine Mikroemulsion der Zusammensetzung gemäß Beispiel 9 hergestellt. Die Herstellung und Zusammensetzung der diskontinuierlichen und kontinuierlichen Phase entsprach ebenso Beispiel 9, der Vordruck in der Mischkammer 7 betrug 8 bar. Die Temperaturführung der diskontinuierlichen Phase erfolgte mit ca. 85 bis 110°C bis zum Eintritt in die Mischkammer 7, die Temperatur der kontinuierlichen Phase betrug 22°C.

Die erhaltene Mikroemulsion war über mehr als 4 Wochen vollständig stabil und zeigte keine Form von Rekristallisation.

**Beispiel 17** Kontinuierliche Herstellung von Mikroemulsionen

Mit dem in Abb. 1 dargestellten Verfahren unter Verwendung einer dreistufigen Mischdüse gemäß Abb. 4, in der ein Strahldispergator (Homogenisierdüse) mit 0,2 mm Bohrungen integriert war, wurde eine Mikroemulsion der Zusammensetzung gemäß Beispiel 12 hergestellt. Die Herstellung und Zusammensetzung der diskontinuierlichen und kontinuierlichen Phase entsprach ebenso Beispiel 12, der Vordruck in der Mischkammer 7 betrug 8 bar. Die Temperaturführung der diskontinuierlichen Phase erfolgte mit ca. 85 bis 110°C bis zum Eintritt in die Mischkammer 7, die Temperatur der kontinuierlichen Phase betrug 22°C.

Die erhaltene Mikroemulsion war über mehr als 4 Wochen vollständig stabil und zeigte keine Rekristallisation.

### Beispiel 18 Geruchsfreie Formulierung eines Desinfektionsmittels (T=Gewichtsteile)

Bei einer Temperatur von 75°C wurden an einem Magnetheizrührer

| | |
|---|---|
| 59 T | der Verbindung 1 (wie in Beispiel 1-14 beschrieben, Verbindung der Komponente b) vorgelegt und |
| 114,5 T | 3-Methyl-4-chlorphenol (Preventol® CMK, Bayer AG, Desinfektionsmittel der Komp. a)) und |
| 0,5 T | Eucalyptol vollständig darin gelöst. |

Anschließend wurden an einem Magnetrührer unter intensivem Mischen

| | |
|---|---|
| 25 T | der obigen Lösung (Ölphase) mit einer Temperatur von 50°C in eine wässrig- organische, kontinuierliche Phase in Form einer normaltemperierten Lösung bestehend aus |
| 69 T | Wasser, |
| 6 T | Pluronic® PE 6800 |
| 30 T | Emulgator® KS |
| 15 T | Dispergiermittel VPSP 25036 : ionisch modifizierter Phenol/Styrol-Polyglykolether hergestellt wie in Beispiel 8, von EP-A 839 879 beschrieben |
| 15 T | N-Methylpyrrolidon |

langsam eingetragen und emulgiert. Man erhielt eine im Temperaturbereich bis 50°C vollständig stabile Mikroemulsion mit einem Wirkstoffgehalt von etwa 10,3 %, die sich leicht ohne weitere Zusätze in Wasser auf gewünschte Wirkstoffkonzentrationen von weniger als 0,5 Gew.-% zu lagerstabilen Verdünnungen einstellen ließ. Im Gegensatz zur nicht emulgierten Ölphase wurde insbesondere sowohl im Emulsionskonzentrat (erfindungsgemäße Mikroemulsion) als auch den wässrigen Verdünnungen keine Rekristallisation des Wirkstoffes festgestellt. Das Emulsionskonzentrat hatte einen angenehmen milden Geruch, der unangenehme Geruch des Wirkstoffes selbst war eliminiert. Mit dem gleichen Verfahren hergestellte Mikroemulsionen, jedoch ohne Eucalyptol in der Ölphase, zeigten ebenso keinen Wirkstoffgeruch.

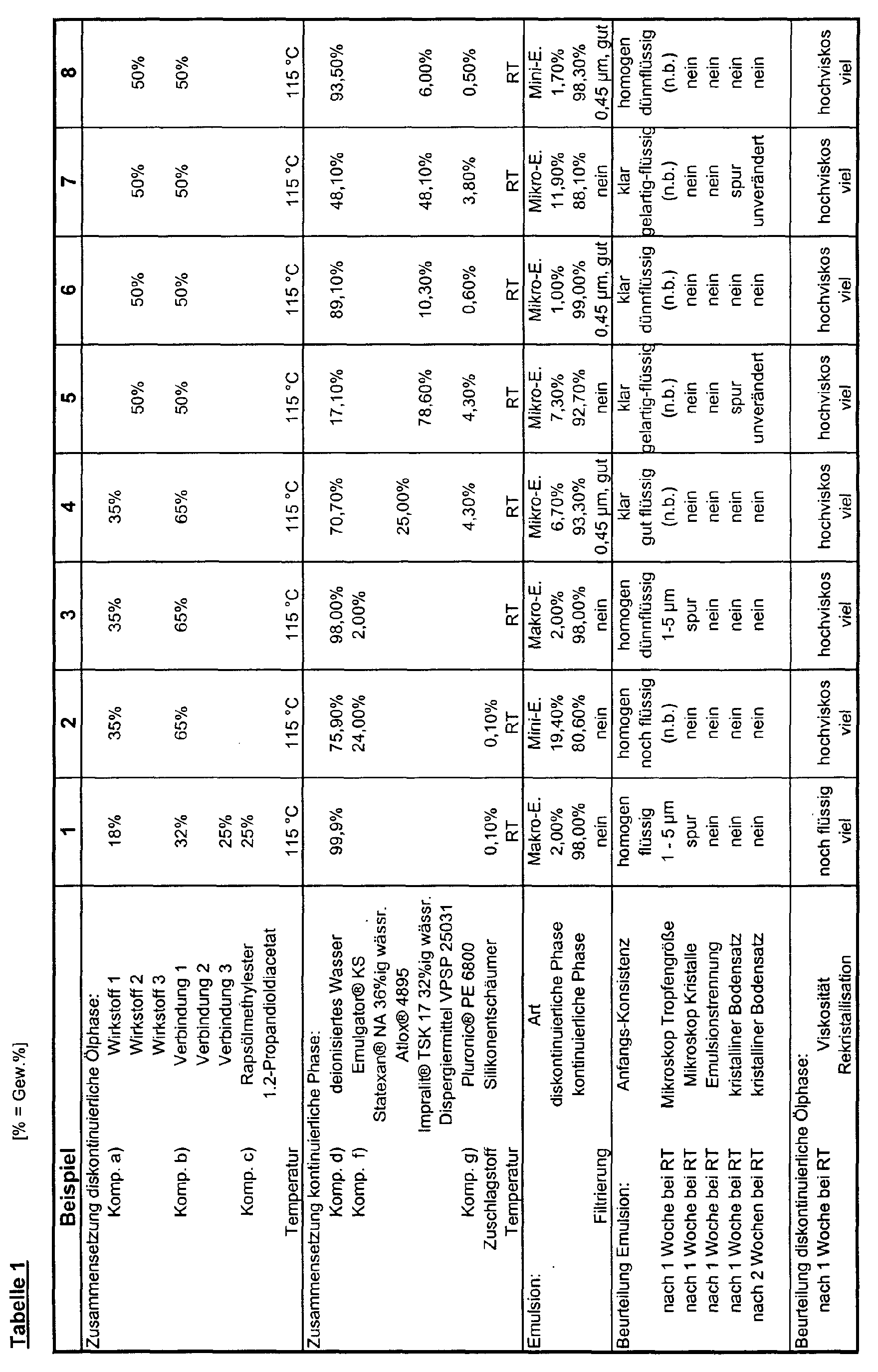

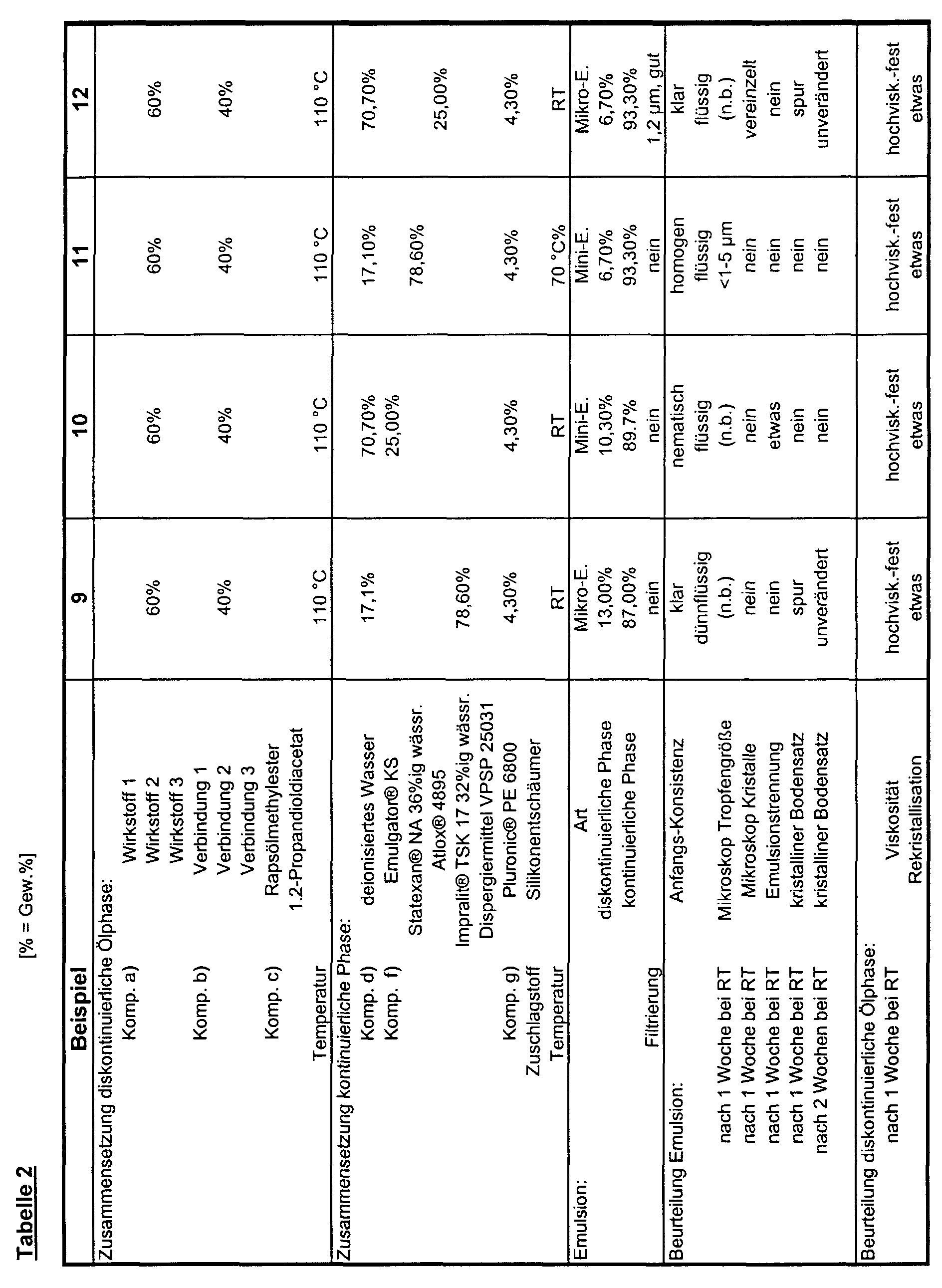

## Patentansprüche

1. Emulsionen aus einer wässrigen oder einer wässrig-organischen, kontinuierlichen Phase und einer organischen diskontinuierlichen Phase, wobei letztere
a) wenigstens einen organischen Wirkstoff mit einer Wasserlöslichkeit bei 20°C von < 10 g/l, insbesondere < 1 g/l und
b) wenigstens eine organische Verbindung mit einer Wasserlöslichkeit bei 20°C von < 1 g/l, insbesondere < 0,1 g/l ausgewählt aus der Gruppe der Umsetzungsprodukte von Alkylenoxiden mit alkylierbaren Verbindungen, wie z.B. Fettalkohole, Fettamine, Fettsäuren, Phenolen, Alkylphenolen, Carbonsäureamide und Harzsäuren, und
c) gegebenenfalls ein mit Wasser nicht mischbares organisches Lösungsmittel enthalten,
**dadurch gekennzeichnet, dass** die Komponente a) in b) oder gegebenenfalls in b) und c) zusammen vollständig gelöst mit einem Gehalt von mehr als 0,1 Gew.-%, insbesondere > 1 Gew.-%, besonders bevorzugt > 10 Gew.-% bei 20°C, bezogen auf das Gesamtgewicht der organischen Phase, vorliegt.

2. Emulsionen gemäß Anspruch 1, **dadurch gekennzeichnet, dass**, bezogen auf die gesamte Emulsion,
1 bis 40 Gew.-%, insbesondere 2 bis 20 Gew.-% der diskontinuierlichen organischen Phase und
60 bis 99 Gew.-% der kontinuierlichen wässrigen oder wässrig-organischen Phase
enthalten sind.

3. Emulsionen gemäß Anspruch 1, **dadurch gekennzeichnet, dass** die kontinuierliche wässrige oder wässrig-organische Phase
d) Wasser
e) gegebenenfalls organisches Lösungsmittel
f) gegebenenfalls ein natürliches oder synthetisches oberflächenaktives Mittel, das in Wasser eine Löslichkeit von > 10 g/l, insbesondere > 100 g/l bei 20°C besitzt.

4. Emulsionen gemäß Anspruch 1, **dadurch gekennzeichnet, dass**, bezogen auf die diskontinuierliche organische Phase,
e) 0 bis 600 Gew.-%, insbesondere 20 bis 400 Gew.-% eines oder mehrerer wasserlöslicher organischer Lösungsmittel,
f) 0 bis 2000 Gew.-%, insbesondere 1 bis 1000 Gew.-% eines oder mehrerer wasserlöslicher oberflächenaktiver Mittel, und
g) 0 bis 100 Gew.-%, insbesondere 1 bis 50 Gew.-% eines oder mehrerer wasserlöslicher Block- oder Block-Copolymere
sowie gegebenenfalls weitere übliche Zuschlagstoffe enthalten sind.

5. Emulsionen gemäß Anspruch 1, **dadurch gekennzeichnet, dass** sie als Mikroemulsionen vorliegen.

6. Mikroemulsionen gemäß Anspruch 5, **dadurch gekennzeichnet, dass**, bezogen auf die diskontinuierliche organische Phase,
e) 0 bis 600 Gew.-%, insbesondere 20 bis 400 Gew.-% eines oder mehrerer wasserlöslicher organischer Lösungsmittel,
f) 10 bis 2000 Gew.-%, insbesondere 100 bis 1000 Gew.-% eines oder mehrerer wasserlöslicher oberflächenaktiver Mittel, und
g) 0 bis 100 Gew.-%, insbesondere 1 bis 50 Gew.-% eines oder mehrerer wasserlöslicher Block- oder Block-Copolymerer sowie gegebenenfalls weitere übliche Zuschlagstoffe enthalten sind.

7. Emulsionen, insbesondere Mikroemulsionen gemäß Anspruch 6, **dadurch gekennzeichnet, dass** das oberflächenaktives Mittel der Komponente f) einen amphoteren oberflächenaktiven Mittel aus der Gruppe der Betaine oder Ampholyte, insbesondere aus der Gruppe der Borsäureester, und ganz bevorzugt der Formel XV entspricht 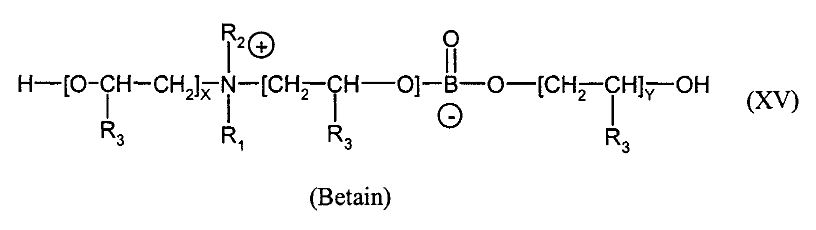 mit
x,y eine Zahl von 1 bis 50, insbesondere 2 bis 30,
R₁, R₂ linear oder verzweigtes C₆-C₁₈-Alkyl und
R₃ für jede durch x oder y indizierte Einheit gleich oder verschieden ist und für Wasserstoff, CH₃ oder Phenyl steht, wobei im Falle der Mitanwesenheit von CH₃ in den verschiedenen -(-CH₂-CH(R³)-O-)-Gruppen in 0 bis 60 % des Gesamtwertes von n R³ für CH₃ und in 100 bis 40 % des Gesamtwertes von n R³ für Wasserstoff steht und wobei im Falle der Mitanwesenheit von Phenyl in den verschiedenen -(-CH₂-CH(R³)-O-)-Gruppen in 0 bis 40 % des Gesamtwertes von n R³ für Phenyl und in 100 bis 60 % des Gesamtwertes von n R³ für Wasserstoff steht.

8. Emulsionen gemäß Anspruch 1, **dadurch gekennzeichnet, dass** die Verbindungen der Komponente b) einen rechnerischen HLB -Wert von weniger als 12, insbesondere weniger als 10 aufweisen und Umsetzungsprodukte sind von Ethylenoxid u/o Propylenoxid mit:
b1) gesättigten und/oder ungesättigten Fettalkoholen mit 6 bis 25 C-Atomen oder
b2) Alkylphenolen mit 4 bis 12 C-Atomen im Alkylrest oder
b3) gesättigten und/oder ungesättigten Fettaminen mit 14 bis 20 C-Atomen oder
b4) gesättigten und/oder ungesättigten Fettsäuren mit 14 bis 22 C-Atomen oder
b5) hydrierten und/oder unhydrierten Harzsäuren,
b6) aus natürlichen oder modifizierten, gegebenenfalls hydrierten Rizinusölfettkörper hergestellte Veresterungs- und/oder Arylierungsprodukte, die gegebenenfalls durch Veresterung mit Dicarbonsäuren zu wiederkehrenden Struktureinheiten verknüpft sind, und insbesondere
b7) oxalkylierte Phenole, insbesondere Phenol/Styrol-Polyglykolether der Formel I) oder II) 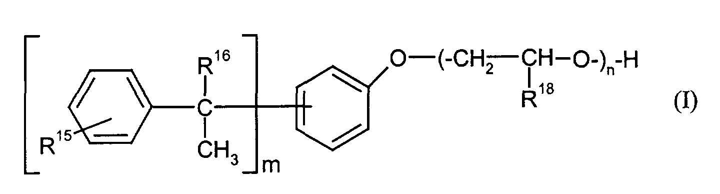 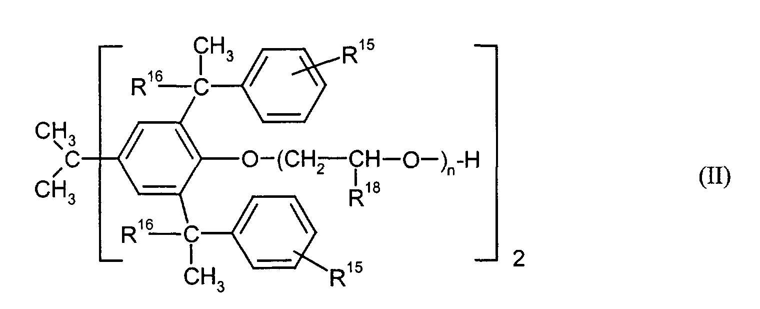 sind
in denen
R¹⁵ Wasserstoff oder C₁-C₄-Alkyl bedeutet,
R¹⁶ für Wasserstoff oder CH₃ steht,
R¹⁷ Wasserstoff, C₁-C₄-Alkyl, C₁-C₄-Alkoxy, C₁-C₄-Alkoxycarbonyl oder Phenyl bedeutet,
m eine Zahl von 1-4 bedeutet,
n eine Zahl von 2-13, insbesondere 2-8 bedeutet,
R¹⁸ für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen-(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht.

9. Verfahren zur Herstellung der Emulsionen gemäß Anspruch 1, **dadurch gekennzeichnet, dass** ein Wirkstoff (a) in der organischen Verbindung (b) gegebenenfalls unter Mitverwendung des Lösungsmittels c) bei einer Temperatur von 20 bis 200°C vollständig gelöst wird, die Lösung gegebenenfalls in dem genannten Temperaturbereich heiß filtriert wird, anschließend die erhaltene Lösung in die wässrige bzw. wässrig-organische Phase emulgiert wird, die erhaltene Emulsion auf eine Temperatur von 10 bis 70°C, vorzugsweise unter 60°C abgekühlt wird und gegebenenfalls abschließend filtriert wird.

10. Verfahren gemäß Anspruch 8, **dadurch gekennzeichnet, dass** die Emulsion mittels Ultraschall-, Hochdruckhomogenisierung oder Strahldispergierung bei Drücken von 2 bis 2500 bar, insbesondere 20 bis 1000 bar, in einer oder mehreren Passagen hergestellt wird.

11. Verfahren gemäß Anspruch 9, **dadurch gekennzeichnet, dass** die kontinuierliche und die diskontinuierliche Phase getrennt hergestellt und anschließend kontinuierlich in einer Mischdüse und/oder Homogenisierdüse zusammengeführt und emulgiert werden und die Emulsion oder Mikroemulsion gegebenenfalls unmittelbar danach auf eine Temperatur von 20 bis 70°C, vorzugsweise < 60°C abgekühlt wird.

12. Verwendung von Emulsionen gemäß Anspruch 1 als Materialschutz, insbesondere Holzschutz oder auf dem Agrogebiet durch Auftragen der Feststoffpräparation auf Holz oder auf Pflanzen- und Anbauflächen, oder auf dem pharmazeutischen Gebiet.

13. Verwendung von Emulsionen gemäß Anspruch 1 zum Einfärben von natürlichen oder synthetischen Materialien.

14. Verwendung gemäß Anspruch 13 nach dem Ink-Jet-Druck oder Thermotransfer-Druck-Verfahren.

15. Emulsionen, insbesondere Mikroemulsionen, gemäß Anspruch 1 enthaltend als Komponente a) 0,1 bis 30 Gew.-%, insbesondere 1 bis 25 Gew.-%, vorzugsweise 10 bis 20 Gew.-% des Wirkstoffs 3-Methyl-4-Chlorphenol.

16. Emulsionen, insbesondere Mikroemulsionen, gemäß Anspruch 1 enthaltend als Komponente a) 0,05 bis 25 Gew.-% vorzugsweise 0,1 bis 20 Gew.-%, insbesondere 1 bis 15 Gew.-% der Wirkstoffe Tebuconazol und/oder Propiconazol.
